# EUROPÄISCHE PATENTSCHRIFT

(11) **EP 0 949 142 B1**
(45) Veröffentlichungstag und Bekanntmachung des Hinweises auf die Patenterteilung: **17.12.2003**
(21) Anmeldenummer: 99103615.3
(22) Anmeldetag: 25.02.1999
(51) Int. Cl.: B64D 17/30

(54) **Gurtzeug für Gleitschirmpiloten**
Harness for paraglider pilot
Harnais pour pilote de parapente

(30) Priorität: 06.04.1998 DE 19815353; 07.08.1998 DE 19835896; 09.11.1998 DE 19851570; 13.11.1998 DE 19852449
(43) Veröffentlichungstag der Anmeldung: 13.10.1999
(73) Patentinhaber: Finsterwalder, Thomas, 81247 München (DE)
(72) Erfinder: Finsterwalder, Thomas, 81247 München (DE)

(56) Entgegenhaltungen:
- WO-A-99/07602
- DE-A- 4 039 516
- DE-U- 9 017 104
- US-A- 4 090 683

## Beschreibung

Die Erfindung betrifft ein Gurtzeug für Gleitschirmpiloten, insbesondere nach dem Oberbegriff des Anspruchs 1.

In der internationalen Patentanmeldung WO 99/07602 wird ein Gurtzeug für Gleitschirmpiloten beschrieben, mit zwei Haupttragegurten, an denen der Gleitschirm befestigbar ist, zwei Schultergurten, einem Brustgurt, der den Oberkörper des Piloten umschließt und mit mindestens einem einen Oberschenkel des Gleitschirmpiloten umschließenden Gurt. Bei dieser Lösung ist es möglich, dass der Gleitschirmpilot mit offenem Brustund Beingurt startet, zunächst mit den Achsetn am Gurt hängen bleibt und dann, wenn ihn die Kraft verlässt abstürzt.
Ein weiterer Nachteil dieser Lösung ist, dass sie nur schwer oder überhaupt nicht für vorhandene Gurtzeuge älterer Bauart nachrüstbar ist.

Der Erfindung liegt die Aufgabe zugrunde, ein Gurtzeug, insbesondere mit den Merkmalen des Oberbegriffs des unabhängigen Anspruchs 1 zu schaffen, das die Sicherheitsvorschriften erfüllt und gutes Handling sowie niedrige Kosten aufweist.

Die Aufgabe, den Piloten sicher mit dem Gleitschirm zu verbinden, wird dadurch gelöst, dass mindestens ein einen Oberschenkel des Piloten umschließender Gurt ein Verbindungselement aufweist, das zur Verbindung eines Haupttragegurtes mit dem Gleitschirm zwingend erforderlich ist. Dadurch ist in einer Ausführungsform sicher gestellt, dass der Gleitschirmpilot nach dem Start nicht von der Sitzfläche abrutschen kann, da er nicht starten kann, ohne mindestens eine Beinschlaufe mit dem Gleitschirm verbunden zu haben und diese dadurch zu schließen.

Sofern der Gleitschirmpilot ein Gurtzeug verwendet, dessen Brustgurt ein Sicherheitsstück eines Verbindungselements aufweist, das zur Verbindung eines Haupttragegurts mit dem Gleitschirm zwingend erforderlich ist, kann er nur mit geschlossenem bzw. überbrücktem Brustgurt starten.

Gurtzeuge älterer Bauart lassen sich einfach auf den Sicherheitsstand nach Anspruch 1 nachrüsten, indem die vorhandenen Gurtschlösser durch Sicherheitsverbindungen überbrückt werden, die zumindest an einem Beingurt oder an der Sitzfläche zwischen den Beinen des Piloten und am Brustgurt befestigt werden, wobei an deren Enden ein Sicherheitsstück eines Verbindungselements angebracht ist, das zur Verbindung eines Haupttragegurts mit dem Gleitschirm zwingend erforderlich ist.

Es ist auch möglich, dass ein Mittelstück des Brustgurts mit zumindest einem Beingurt fest verbunden ist und an den freien Enden des Mittelstücks je ein Sicherheitsstück eines Verbindungselements befestigt ist, das zur Verbindung je eines Haupttragegurts mit dem Gleitschirm zwingend erforderlich ist. Durch diese Lösung ist der Gleitschirmpilot mit dem Gleitschirm sicher verbunden und gegen Herausfallen aus dem Gurtzeug geschützt.
Die Verbindungselemente ersetzten die sonst erforderlichen Karabiner an den Haupttragegurten sowie die Gurtschlösser an Bein- und Brustgurten, wodurch der Bauaufwand für das Gurtzeug wesentlich sinkt.

Die in den Ansprüchen verwendeten Begriffe "Brustgurt" und "den Oberschenkel umschließenden Gurt" sind so zu verstehen, dass alle die Brust bzw. den Oberschenkel des Gleitschirmpiloten in einer geschlossenen Kette umfangenden Elemente eines Gleitschirmgurtes damit gemeint sind.

Es ist von Vorteil, wenn das Verbindungselement ein Schraubkettenglied oder ein Karabiner ist, denn diese Verbindungselemente sind einfach, kostengünstig und am Markt verfügbar und lassen sich an Bein- oder Brustgurt durch Einnähen dauerhaft befestigen. Die Tragegurte von Gurtzeug und Gleitschirm müssen allerdings etwas umständlich vor jedem Start durch das Karabiner- bzw. Schraubkettengliedschloss eingefädelt werden.

Eine besonders vorteilhafte Ausführung eines dreiteiligen Verbindungselements, ist dadurch gegeben, dass das Haupttragegurtteil ein Kastenprofil mit vorzugsweise rechteckigem Querschnitt aufweist, an dem vorzugsweise auf den Schmalseiten innen eine U-förmige Tragöse für den Haupttragegurt befestigt ist, und dass in den beiden Schmalseiten fluchtende Öffnungen zum Einstecken des Sicherheitsstücks vorgesehen sind. Der Kastenquerschnitt kann vorzugsweise aus Aluminium Strangpressprofil hergestellt werden und die U-förmige Tragöse ist ein einfach herzustellendes Stanz- und Biegeteil, das auch demontierbar ausgeführt werden kann.

Es ist von Vorteil, dass das Gleitschirmteil eine mit Spiel in das Kastenprofil einsteckbare, vorzugsweise massive Rechteckform mit einer zu den Öffnungen passenden Durchgangsöffnung aufweist.
Die Verbindung von Kastenprofil und Gleitschirmteil ist einfach in der Handhabung, da das Sicherheitsteil leicht anzubringen ist.

Wenn das Sicherheitsteil als Stecker eines Gurtschlosses ausgebildet ist, das in der Flucht der Öffnungen des Haupttragegurtteils befestigt ist, kann auf die bewährte Mechanik und Handhabung gängiger Zweitasten-Gurtschtösser zurückgegriffen werden. Diese Gurtschlösser können auch mit einer Sicherheitsverriegelung der Tasten ausgerüstet werden.

Weitere Merkmale der Erfindung ergeben sich aus der folgenden Beschreibung und der Zeichnung, in der Ausführungsbeispiele der Erfindung schematisch dargestellt sind.

Es zeigen:
- Fig. 1:: Ein Gurtzeug mit je einer an einem Beingurt und an einem Brustgurt befestigten Sicherheitsverbindung mit Sicherheitsstücken von Verbindungselementen
- Fig. 2:: Ein Gurtzeug nach Fig. 1, jedoch mit einem Mittelstück des Brustgurts, an dem die Verbindungsstücke, eine Sicherheitsverbindung und ein Kreuzgurt befestigt sind
- Fig. 3:: Ein verschließbarer Karabiner mit zwei gänzlich voneinander getrennten Gurtkammern und einer teilweise getrennten G urtkammer
- Fig. 4:: Ein Haupttragegurtstück
- Fig. 4a:: Ein Gleitschirmstück
- Fig. 4b:: Ein Sicherheitsstück

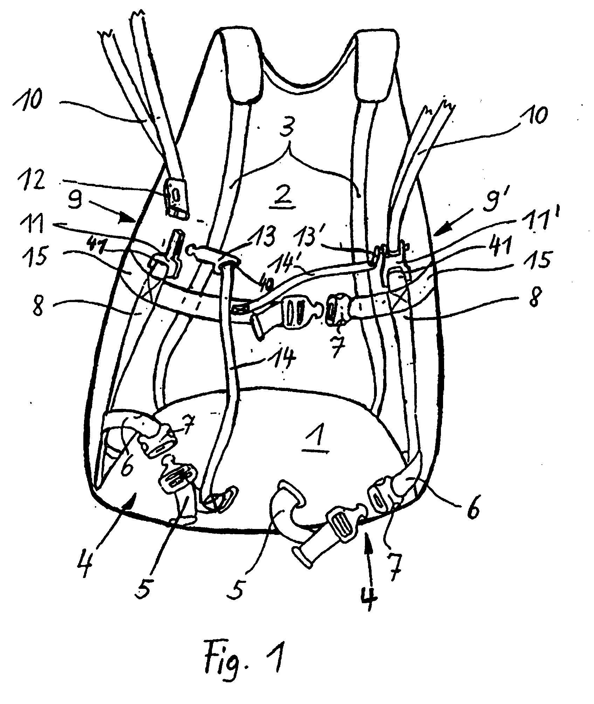

Das Gurtzeug nach Fig. 1 weist eine Sitzfläche (1) auf, an der ein Rückenteil (2) mit zwei Schultergurten (3) befestigt ist. Außerdem sind zwei Beingurte (4) mit je einer inneren Hälfte (5) und einer äußeren Hälfte (6) angebracht, die über Gurtschlösser (7) schließbar sind An der Sitzfläche (1) sind zudem zwei Haupttragegurte (8) befestigt, an deren freiem Ende entweder ein dreiteiliges oder zweiteiliges oder einteiliges Verbindungselement (9),(9'),(9'') angebracht werden kann. Die Verbindungselemente (9),(9'),(9") dienen zur Befestigung eines Gleitschirms (10) am Gurtzeug.

Das dreiteilige Verbindungselement (9) besteht aus einem am Haupttragegurt (8) befestigten Haupttragegurtstück (11), einem am Gleitschirm (10) befestigten Gleitschirmstück (12) und einem Sicherheitsstück (13), das mit einer Sicherheitsverbindung (14) über eine geschlossene Gurtkammer (40) verbunden ist. Die Sicherheitsverbindung (14) ist an der inneren Hälfte (5) eines der beiden Beingurte (4) angebracht.

Die Sicherheitsverbindung (14) kann auch beispielsweise an der Sitzfläche (1) im Bereich zwischen den Beinen des Gleitschirmpiloten angebracht sein.
Dann würde der "den Oberschenkel des Piloten umschließende Gurt" aus den Gurtelementen Sicherheitsverbindung (14), Sicherheitsstück (13), Haupttragegurtstück (11), Haupttragegurt (8), Sitzfläche (1) und gegebenenfalls Sitzbrett gebildet.
Das zweiteilige Verbindungselement (9') besteht aus einem am Haupttragegurt (8) über eine mit einem Bolzen verschließbare Gurtkammer (41) befestigten anderen Haupttragegurtstück (11') und einem an einer anderen Sicherheitsverbindung (14') befestigten anderen Sicherheitsstück (13'). Die andere Sicherheitsverbindung (14') ist an einem Brustgurt (15) angebracht, der durch ein Gurtschloss (7) schließbar ist. Der Brustgurt (15) ist mit dem Haupttragegurt (8) fest und mit den Schultergurten (3) vorzugsweise verschiebbar verbunden.

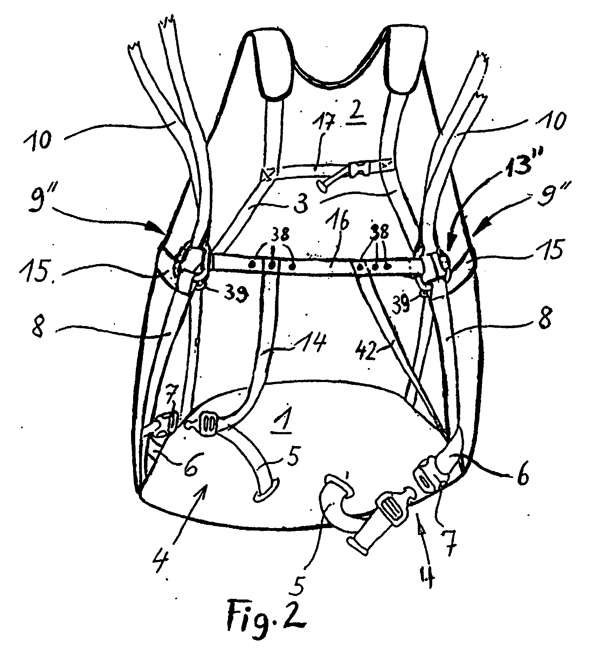

Fig. 2 unterscheidet sich von Fig. 1 durch ein Gurtzeug mit einteiligen Verbindungselementen (9"), die zudem durch ein Mittelstück (16) des Brustgurts (15) verbunden sind. Am Mittelstück (16) ist eine Sicherheitsverbindung (14) befestigt, die mit den inneren Hälften (5) der Beingurte (4) verbunden ist. Außerdem ist am Mittelstück (16) an einem der verschiedenen Befestigungspunkte (38) ein am Rand der Sitzfläche (1) fixierter Kreuzgurt (42) befestigt. Das Verbindungselement (9") ist ein handelsübliches Schraubkettenglied oder ein Karabiner. Es weist nur eine Gurtkammer auf, in der Gleitschirm-Tragegurte (10), Haupttragegurt (8) und Brustgurt-Mittelstück (16) untergebracht sind. Letzteres ist mittels einer eng genähten Schlaufe dauerhaft mit dem Verbindungselement (9''), das so zugleich Sicherheitsstück ist, verbunden. Die Schultergurte (3) sind in ihrem oberen Bereich durch einen mit einem Schloss versehenen Hilfsgurt (17) verbunden, der u.a. ein Abgleiten der Schultergurte (3) von den Schultern des Gleitschirmpiloten verhindern soll. Außerdem sind die Schultergurte (3) in Ringen (39), die an den Hauttragegurten (8) befestigt sind, verschließbar geführt.

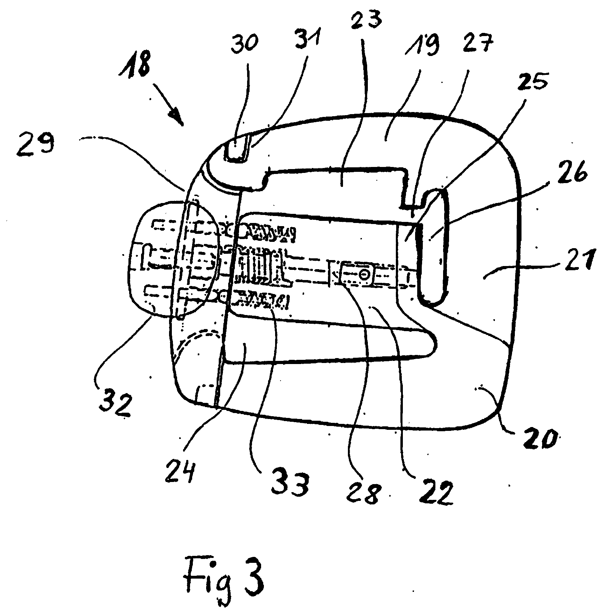

Fig. 3 zeigt einen verschließbaren Karabiner (18) mit einem ersten Bügel (19) und einem zweiten Bügel (20), die durch eine Brücke (21) verbunden sind und ein offenes U bilden. Der Raum zwischen den Bügeln (19,20) wird durch ein Trennstück (22) geteilt, das mit der Brücke (21) einstückig ausgebildet ist.

Durch den ersten Bügel (19) und das Trennstück (22) wird eine erste Gurtkammer (23), durch den zweiten Bügel (20) und das Trennstück (22) eine zweite Gurtkammer (24) gebildet. Zwischen einem Fuß (25) des Trennstücks (22) und der Brücke (21) ist eine teilweise getrennte Gurtkammer (26) angeordnet, die durch einen Engpaß (27) mit der ersten Gurtkammer (23) in Verbindung steht.

Im Trennstück (22) ist eine Drehachse (28) für ein Drehverschlussstück (29) angeordnet. Das Drehverschlussstück (29) greift mit Haken (30) in entsprechende Nuten (31) der Bügel (19,20) an deren freien Enden ein, wodurch der Karabiner geschlossen und in mehreren Zugrichtungen belastbar ist.

Durch Betätigen eines Druckknopfs (32) ist eine Verdrehsperre (33) lösbar, wodurch das Drehverschlussstück (29) um 90° verdrehbar und der verschließbare Karabiner (18) zu öffnen ist.

Die erste Gurtkammer (23) ist für den Gleitschirm (10), die zweite Gurtkammer (24) für den Haupttragegurt (8) und die teilweise getrennte Gurtkammer (26) für den Brustgurt (15) oder die Sicherheitsverbindung (14) vorgesehen. Der Engpass (27) verhindert ein leichtes Herausnehmen des Brustgurts (15).

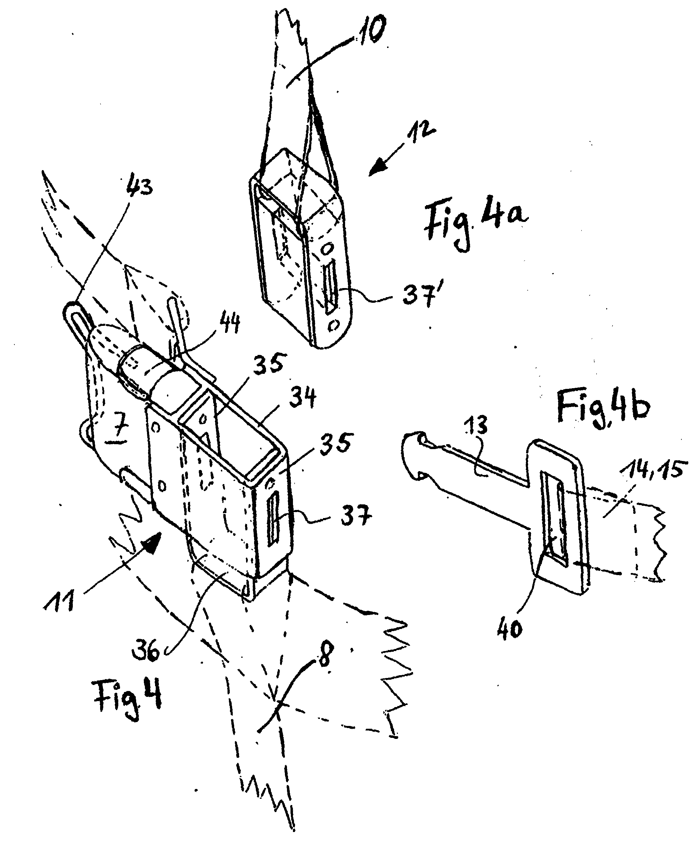

In Fig. 4 ist ein Haupttragegurtteil (11) dargestellt, das ein Kastenprofil (34) mit rechteckigem Querschnitt aufweist. An den Schmalseiten (35) ist innen eine U-förmige Trageöse (36) für den Haupttragegurt (8) befestigt.

In den beiden Schmalseiten (35) sind fluchtende Durchgangsöffnungen (37) zum Einstecken eines Sicherheitsstücks (13) vorgesehen (siehe Fig. 4b), an dessen geschlossener Gurtkammer (40) des Mittelstücks (16) des Brustgurts (15) oder die Sicherheitsverbindung (14) befestigt sind.

In der Flucht der Durchgangsöffnungen (37) ist ein Gurtschloss (7) am Hauptgurtteil (11) befestigt, in das das Sicherheitsstück (13) einsteckbar und verriegelbar ist. Durch eine am Gurtschloss (7) angebrachte Tastenverriegelung (43) können die Tasten (44) blockiert und ein versehentliches Lösen des Sicherheitsstücks (13) ausgeschlossen werden.

Fig. 4a zeigt ein Gleitschirmteil (12), das mit Spiel in das Kastenprofil (34) einsteckbar ist und das eine Öffnung (37') aufweist, die zu den Durchgangsöffnungen (37) passt. Durch das Hindurchstecken des Verbindungsstücks(13) durch die Durchgangsöffnungen (37) und die Öffnung (37') in das Gurtschloss (7) sind Gleitschirm und Gurtzeug lösbar verbunden und die Sicherheitsverbindung zwangsweise angelegt.

Die erfindungsgemäßen Gurtzeuge nach Fig. 1 - 4b funktionieren folgendermaßen:
Vor dem Anlegen des Gurtzeugs sind sämtliche Gurtschlösser (7) und Verbindungselemente (9), (9'), (9") geöffnet. Nach Anlegen der Schultergurte (3) werden bei der Ausführung nach Fig. 1 das Gurtschloss (7) des Brustgurts (15) und die Gurtschlösser (7) der Beinschlaufen (4) geschlossen. Dann werden bei dem dreiteiligen Verbindungselement (9) das Gleitschirmstück (12) über das Haupttragegurtstück (11) ineinander gesteckt und das Sicherheitsstück (13) in diese Einheit quer eingesteckt und axial durch ein Gurtschloss (7) gesichert. Dadurch sind Haupttragegurt (8) und Gleitschirm (10) fest miteinander verbunden. Außerdem wurde ein den Oberschenkel des Gleitschirmpiloten umschließender Gurt aus Sicherheitsverbindung (14), dreiteiligem Verbindungselement (9), Haupttragegurt (8) und Sitzfläche (1) gebildet, die im Falle eines nicht geschlossenen Beingurts (4) dessen Funktion voll übernimmt.

Dadurch sind zugleich die Startfähigkeit und die Sicherheit gegen Herausfallen aus dem Gurtzeug gewährleistet.

Bei dem zweiteiligen Verbindungselement (9') wird in ein anderes Haupttragegurtstück (11') und in eine Schlaufe des Gleitschirms (10) ein anderes Sicherheitsstück (13') eingesteckt und axial verriegelt. Dadurch sind zugleich der Haupttragegurt (8) und der Gleitschirm (10) verbunden sowie das Gurtschloss (7) des Brustgurts (15) überbrückt.

Sollte dieses nicht geschlossen sein, so übernimmt die andere Sicherheitsverbindung (14') voll deren Funktion, so dass der Brustgurt (15) auch dann quasi geschlossen ist. Durch Schließen des dreiteiligen und des zweiteiligen Verbindungselements (9, 9') wird der Gleitschirm an den Haupttragegurten (8) befestigt und zugleich zwangsläufig eine doppelte Sicherung gegen Herausfallen aus dem Gurtzeug bei nicht angelegtem Bein- und Brustgurt geschaffen.

Bei dem einteiligen Verbindungselemt (9") der Fig. 2 wird dieses in geöffnetem Zustand auf beiden Seiten des Gurtzeugs in eine Schlaufe des Haupttragegurts (8) und des Gleitschirms (10) geschoben und verriegelt. Dadurch sind die Haupttragegurte (8) mit dem Gleitschirm (10) verbunden.
Zugleich ist der Brustgurt (15) durch das Mittelstück (16) zwangsweise geschlossen. Dasselbe gilt für die Beingurte (4), die durch die aus Sicherheitsverbindung (14), Mittelstück (16), Verbindungselement (9"), Haupttragegurte (8) und Sitzfläche (1) gebildeten Beingurte ergänzt oder im Falle offener Beingurte (4) zwangsweise ersetzt werden.
Die Verbindungselemente (9,9',9'') sind selbstverständlich gegeneinander austauschbar und können auch umgekehrt eingebaut werden.

### Bezugszeichenliste

### Gurtzeug für Gleitschirmpiloten

- 1: Sitzfläche
- 2: Rückenteil
- 3: Schultergurt
- 4: Beingurt
- 5: innere Hälfte
- 6: äußere Hälfte
- 7: Gurtschloss
- 8: Haupttragegurt
- 9: dreiteiliges Verbindungselement
- 9': zweiteiliges Verbindungselement
- 9'': einteiliges Verbindungselement
- 10: Gleitschirm
- 11: Haupttragegurtstück
- 11': anderes Haupttragegurtstück
- 12: Gleitschirmstück
- 13: Sicherheitsstück
- 13': anderes Sicherheitsstück
- 14: Sicherheitsverbindung
- 14': andere Sicherheitsverbindung
- 15: Brustgurt
- 16: Mittelstück
- 17: Hilfsgurt
- 18: verschließbarer Karabiner
- 19: erster Bügel
- 20: zweiter Bügel
- 21: Brücke
- 22: Trennstück
- 23: erste Gurtkammer
- 24: zweite Gurtkammer
- 25: Fuß
- 26: teilweise getrennte Gurtkammer
- 27: Engpass
- 28: Drehachse
- 29: Drehverschlussstück
- 30: Haken
- 31: Nut
- 32: Druckknopf
- 33: Verdrehsperre
- 34: Kastenprofil
- 35: Schmalseite
- 36: Trageöse
- 37: Durchgangsöffnung
- 37': Öffnung
- 38: Befestigungspunkt
- 39: Ring
- 40: geschlossene Gurtkammer
- 41: verschließbare Gurtkammer
- 42: Kreuzgurt
- 43: Tastenverriegelung
- 44: Taste

## Patentansprüche

1. Gurtzeug für Gleitschirmpiloten, mit zwei Haupttragegurten (8), an denen der Gleitschirm (10) befestigbar ist, zwei Schultergurten (3), einem Brustgurt (15), der den Oberkörper des Piloten umschließt und mit mindestens einem einen Oberschenkel des Piloten umschließenden Gurt (4),
**dadurch gekennzeichnet, dass** mindestens einer der einen Oberschenkel des Gleitschirmpiloten umschließenden Gurte (4) und/oder der Brustgurt (15) ein lösbares Sicherungsstück (13,13',13'') eines Verbindungselements (9,9',9") aufweist, das zur Verbindung eines der Haupttragegurte (8) mit dem Gleitschirm (10) zwingend erforderlich ist.

2. Gurtzeug für Gleitschirmpiloten nach Anspruch 1,
**dadurch gekennzeichnet, dass** das Verbindungselement (9") ein Schraubkettenglied oder ein Karabiner mit vorzugsweise nach außen zu öffnendem Verschluß ist.

3. Gurtzeug für Gleitschirmpiloten nach Anspruch 1,
**dadurch gekennzeichnet, dass** ein Haupttragestück (11) des Haupttragegurts (8) ein Kastenprofil (34) mit vorzugsweise rechteckigem Querschnitt aufweist, an dem vorzugsweise auf den Schmalseiten (35) innen eine vorzugsweise U-förmige Trageöse (36) für den Haupttragegurt (8) befestigt ist und, dass in den beiden Schmalseiten (35) fluchtende Öffnungen (37) zum Einstecken des Sicherheitsstücks (13) vorgesehen sind.

4. Gurtzeug für Gleitschirmpiloten nach Anspruch 3,
**dadurch gekennzeichnet, dass** ein Gleitschirmstück (12) des Gleitschirms (10) eine mit Spiel in das Kastenprofil (34) einsteckbare, vorzugsweise massive Rechteckform mit einer zu den Öffnungen (37) passenden Durchgangsöffnung (37') aufweist.

5. Gurtzeug für Gleitschirmpiloten nach Anspruch 4,
**dadurch gekennzeichnet, dass** das Sicherheitsteil (13) als Stecker eines Gurtschlosses (7) ausgebildet ist, das in Flucht der Öffnungen (37) am Haupttragegurtstück (11) befestigt ist.

## Claims

1. Harness for paraglider pilots, having two main supporting straps (8) to which the paraglider (10) can be fastened, two shoulder straps (3), a chest strap (15), which surrounds the pilot's upper body, and having at least one strap (4) surrounding the pilot's thigh, **characterized in that** at least one of the straps (4) surrounding the paraglider pilot's thigh and/or the chest strap (15) have/has a detachable safety component (13, 13', 13'') of a connecting element (9, 9', 9''), the said safety component being absolutely essential to connect one of the main supporting straps (8) to the paraglider (10).

2. Harness for paraglider pilots according to Claim 1, **characterized in that** the connecting element (9'') is a screwed chain link or a karabiner with a lock which can preferably open outwards.

3. Harness for paraglider pilots according to Claim 1, **characterized in that** a main supporting component (11) of the main supporting strap (8) has a box profile (34) with a preferably rectangular cross section, to which a preferably U-shaped supporting loop (36) for the main supporting strap (8) is fastened, preferably on the inside of the narrow side (35), and **in that** aligned openings (37) are provided in the two narrow sides (35) for insertion of the safety component (13).

4. Harness for paraglider pilots according to Claim 3, **characterized in that** a paraglider component (12) of the paraglider (10) has a preferably solid rectangular shape which can be inserted with a clearance into the box profile (34) and has a passage opening (37') complementary to the openings (37).

5. Harness for paraglider pilots according to Claim 4, **characterized in that** the safety part (13) is designed as a connector of a buckle (7) which is fastened such that it is aligned with the openings (37) on the main supporting strap component (11).

## Revendications

1. Harnais pour pilotes de parapente, comprenant deux sangles de support principales (8) auxquelles peut être fixé le parapente (10), deux sangles d'épaule (3), une sangle pectorale (15) qui entoure le buste du pilote et au moins une sangle (4) entourant une cuisse du pilote,
**caractérisé en ce qu**'au moins l'une des sangles (4) entourant l'une des cuisses du pilote de parapente et/ou la sangle pectorale (15) présentent une pièce de sécurité détachable (13, 13', 13") d'un élément de connexion (9, 9', 9"), qui est absolument nécessaire pour la connexion de l'une des sangles de support principales (8) au parapente (10).

2. Harnais pour pilotes de parapente selon la revendication 1,
**caractérisé en ce que** l'élément de connexion (9") est un maillon vissable ou un mousqueton avec de préférence une fermeture s'ouvrant vers l'extérieur.

3. Harnais pour pilotes de parapente selon la revendication 1,
**caractérisé en ce qu'**une pièce de support principale (11) de la sangle de support principale (8) présente un profil en forme de cassette (34) avec de préférence une section transversale rectangulaire, sur laquelle est fixé de préférence sur les petits côtés (35), à l'intérieur, un oeillet de support de préférence en forme de U (36) pour la sangle de support principale (8) et **en ce que** des ouvertures (37) alignées dans les deux petits côtés (35) sont prévues pour enfoncer la pièce de sécurité (13).

4. Harnais pour pilotes de parapente selon la revendication 3,
**caractérisé en ce qu'**une pièce de parapente (12) du parapente (10) présente une forme rectangulaire de préférence massive pouvant être enfoncée avec jeu dans le profil en forme de cassette (34), avec une ouverture de passage (37') adaptée aux ouvertures (37).

5. Harnais pour pilotes de parapente selon la revendication 4,
**caractérisé en ce que** la pièce de sécurité (13) est réalisée sous la forme de fiche d'une fermeture de sangle (7), qui est fixée dans l'alignement des ouvertures (37) sur la pièce de sangle de support principale (11).
